# FASCICULE DE BREVET EUROPEEN

(11) **EP 3 815 402 B1**
(45) Date de publication et mention de la délivrance du brevet: **29.06.2022**
(21) Numéro de dépôt: 19732685.3
(22) Date de dépôt: 27.06.2019
(51) Int. Cl.: H04W 4/70, H04L 9/40, H04L 67/104, H04W 4/38, H04L 67/56, H04L 67/145

(54) **PROCÉDÉ ET SYSTÈME DE MUTUALISATION DE LA COMMUNICATION ENTRE DES ÉQUIPEMENTS DOMOTIQUES CONNECTÉS ET UN ÉQUIPEMENT DISTANT**
VERFAHREN UND SYSTEM ZUR GEMEINSAMEN KOMMUNIKATION ZWISCHEN ANGESCHLOSSENEN HEIMAUTOMATIONSVORRICHTUNGEN UND EINER ENTFERNTEN VORRICHTUNG
METHOD AND SYSTEM FOR SHARING COMMUNICATION BETWEEN CONNECTED HOME-AUTOMATION DEVICES AND A REMOTE DEVICE

(30) Priorité: 28.06.2018 FR 1855844
(43) Date de publication de la demande: 05.05.2021
(73) Titulaire: Somfy Activites SA, 74300 Cluses (FR)
(72) Inventeur: COSSERAT, Hubert, 74100 Vetraz Monthoux (FR); ORSAT, Jean Michel, 74300 Châtillon sur Cluses (FR)
(74) Mandataire: Lavoix
(86) Numéro de dépôt international: PCT/EP2019/067119
(87) Numéro de publication internationale: WO 2020/002490

(56) Documents cités:
- WO-A1-2017/176241
- US-A1- 2014 379 900
- US-A1- 2018 091 600

## Description

La présente invention concerne un procédé et un système de mutualisation de la communication entre des équipements domotiques connectés appartenant à un premier réseau de communication et un équipement distant appartenant à un deuxième réseau de communication.

Elle se situe dans le domaine des objets ou équipements connectés, et trouve une application particulière dans le domaine des installations domotiques.

On entend par équipement connecté, tout dispositif muni d'au moins un moyen de télécommunication configuré pour émettre et/ou recevoir un signal électrique ou électromagnétique selon au moins un protocole de communication prédéterminé. L'équipement est connecté à un réseau de communication ou d'échange de données, et peut être interrogeable et/ou contrôlable à distance. L'équipement connecté est de type quelconque. Il peut s'agir, par exemple, d'un actionneur, un capteur de mesure, d'un point de commande, etc. Par la suite, les équipements connectés à un réseau de communication sont dits appartenir au réseau de communication.

De manière connue, notamment dans le domaine des installations domotiques, des équipements divers sont dotés d'une capacité de communication selon un protocole réseau, comme le protocole IP (pour « Internet Protocol »), et sont adaptés à communiquer entre eux selon une topologie donnée. La connexion des équipements domotiques entre eux forme un premier réseau de communication qui est un réseau local ou LAN (pour « *Local Area Network* »), par exemple un réseau domestique. Par la suite, les équipements connectés appartenant au réseau local seront appelés « équipements locaux ».

Pour communiquer avec des équipements externes au réseau local, également appelés ci-après équipements distants, par exemple des serveurs, connectés à un deuxième réseau de communication qui est un réseau étendu ou WAN (pour « *Wide Area Network* »), typiquement le réseau Internet, il est usuel d'utiliser un équipement réseau effectuant notamment une traduction d'adressage entre des adresses locales, également appelées « adresses privées », sur le réseau local et des adresses du réseau étendu également nommées « adresses publiques ». On dit dans ce cas que l'équipement réseau met en œuvre une fonction de traduction d'adresses ou NAT (pour « *Network Address Translation* »). Il est également connu d'implémenter une fonctionnalité de protection, appelée pare-feu (ou « *firewall* » en anglais), pour assurer un certain niveau de sécurité du réseau local et éviter le piratage informatique.

De manière connue, la communication entre des équipements locaux et des équipements distants consiste en l'émission et la réception de paquets de données formatés selon au moins un protocole de communication choisi. La circulation de paquets de communication sur un réseau de communication ou entre des réseaux de communication est appelée trafic réseau.

Il est possible d'effectuer une configuration pour ouvrir un ou plusieurs ports de communication de l'équipement réseau pour autoriser à des serveurs distants, appartenant au deuxième réseau, à communiquer avec des équipements du réseau local. Mais une telle configuration est complexe à mettre en œuvre pour un utilisateur qui n'est pas un informaticien. De plus, la configuration des ports de communication peut dépendre de l'équipement réseau utilisé.

Il est également possible de maintenir actives des sessions de communication entre des équipements locaux et un équipement distant, en utilisant le protocole TCP (« *Transmission Control Protocol* »), chaque session étant maintenue jusqu'à l'émission d'une commande de fin de session. Cela pose problème car le maintien d'une session TCP est consommateur d'énergie électrique pour les équipements locaux et distants, alors que dans une installation domotique, certains des équipements connectés locaux sont alimentés par batterie. La publication WO2017/176241 A1 décrit un procédé de maintient d'une connexion TCP pour un équipement domestique par l'envoi de paquets "keep-alive" au niveau d'un équipement proxy du réseau domestique.

Alternativement, un équipement local peut utiliser le protocole UDP (« *User Datagram Protocol* ») pour contacter un équipement distant. Cette communication entre un équipement local et un équipement distant créé un canal de communication ou « trou » de communication (en anglais, « *UDP hole punching* ») dans l'équipement réseau assurant la fonction de traduction d'adresses et/ou firewall. Ce canal de communication est maintenu actif pendant une durée prédéterminée en l'absence de trafic réseau. Afin d'éviter une désactivation du canal de communication suite à une absence de trafic réseau prolongée, des paquets élémentaires de petite taille (en anglais « *keep alive packets* ») destinés à maintenir le canal de communication actif sont envoyés avant l'expiration de la durée prédéterminée (ou « *timeout* » en anglais).

Bien que le maintien d'un canal de communication UDP soit moins consommateur en énergie électrique pour un équipement connecté que le maintien d'une session TCP, cela reste néanmoins une consommation d'électricité non négligeable pour un équipement domotique connecté et plus particulièrement pour un équipement domotique connecté autonome, alimenté par pile rechargeable ou batterie.

L'invention a pour but d'améliorer la communication de tout équipement connecté d'un premier réseau de communication avec un équipement distant comme un serveur appartenant à un deuxième réseau de communication, tout en remédiant aux inconvénients de l'état de la technique.

A cet effet, l'invention propose, selon un premier aspect, un procédé de mutualisation de la communication entre des équipements domotiques connectés à un premier réseau et un équipement distant appartenant à un deuxième réseau de communication, le premier réseau de communication étant connecté au deuxième réseau de communication par un équipement réseau adapté à permettre une communication entre au moins un équipement domotique connecté du premier réseau et ledit équipement distant. Ce procédé comporte :
- une détermination d'un équipement de liaison de communication parmi les équipements domotiques connectés du premier réseau de communication, en fonction d'au moins une caractéristique desdits équipements domotiques connectés, et
- un maintien par ledit équipement de liaison de communication d'un canal de communication entre le premier réseau de communication et l'équipement distant à travers ledit équipement réseau au profit des autres équipements domotiques connectés du premier réseau de communication.

Avantageusement, le procédé de l'invention permet de déterminer un équipement de liaison de communication destiné à maintenir active une liaison de communication mutualisée entre tous les équipements connectés du premier réseau et l'équipement distant du deuxième réseau de communication.

Ainsi, avantageusement, les ressources consommées par les équipements connectés du premier réseau de communication autres que l'équipement de liaison de communication et les ressources consommées par l'équipement distant sont réduites par rapport à une configuration dans laquelle tous les équipements domotiques connectés du premier réseau de communication maintiennent actif un canal de communication avec l'équipement distant. Cette réduction de consommation concerne aussi bien les ressources en électricité que les ressources calculatoires et radiofréquences. Par conséquent, la durée de vie des équipements connectés appartenant au premier réseau de communication, et notamment les équipements connectés autonomes, est augmentée. De même, les communications transitant entre le premier réseau de communication et le deuxième réseau de communication sont réduites du fait de l'absence d'émission de paquets élémentaires de petite taille destinés à maintenir chaque canal de communication actif. Le trafic réseau est donc également réduit.

Le procédé de mutualisation de la communication selon l'invention peut présenter une ou plusieurs des caractéristiques ci-dessous, prises indépendamment ou en combinaison, selon toutes les combinaisons techniquement acceptables.

Le maintien d'un canal de communication comporte un envoi régulier de paquets élémentaires de maintien de connexion par ledit équipement de liaison de communication vers l'équipement distant.

La détermination d'un équipement de liaison de communication dépend d'au moins une caractéristique parmi l'ensemble de caractéristiques comportant une caractéristique de type d'alimentation électrique, une caractéristique de capacité de calcul embarquée, une caractéristique de qualité de service, une caractéristique de position spatiale dans le premier réseau, une caractéristique relative à l'environnement radiofréquence.

Chaque équipement domotique connecté appartenant au premier réseau de communication effectue la détermination d'un équipement de liaison de communication parmi les équipements domotiques connectés et met en oeuvre :
- une réception d'un message de découverte provenant d'au moins un autre équipement domotique connecté appartenant audit premier réseau et comprenant un identifiant dudit autre équipement domotique connecté et une valeur de caractéristique associée à chaque caractéristique dudit ensemble de caractéristiques pour ledit autre équipement domotique connecté,
- une mémorisation des valeurs de caractéristiques reçues dans une table de caractéristiques,
- une détermination de l'équipement de liaison de communication en fonction des valeurs de caractéristiques mémorisées dans la table de caractéristiques.

La détermination de l'équipement de liaison de communication comporte un calcul d'un score global associé audit au moins un autre équipement domotique connecté en fonction des valeurs de caractéristiques mémorisées et un calcul d'un score global propre, et une comparaison des scores globaux calculés, l'équipement de liaison de communication ayant un score global associé maximal.

Le procédé comporte des étapes, mises en œuvre par l'équipement distant, de :
- réception, en provenance d'au moins une pluralité d'équipements domotiques connectés appartenant au premier réseau de communication, d'un ensemble d'informations caractéristiques globales de chaque équipement domotique connecté de ladite pluralité, l'ensemble d'informations caractéristiques globales comportant un identifiant de dudit équipement domotique connecté et une valeur de caractéristique associée à chaque caractéristique dudit ensemble de caractéristique pour ledit équipement domotique connecté,
- mémorisation des valeurs de caractéristiques reçues dans une table de caractéristiques,
- calcul d'un score global associé à chaque équipement domotique connecté parmi ladite pluralité d'équipements domotiques connectés, en fonction des valeurs de caractéristiques mémorisées,
- détermination de l'équipement de liaison de communication en fonction des scores globaux calculés.

La détermination de l'équipement de liaison de communication comporte un calcul d'un score global associé à chaque équipement domotique connecté parmi ladite pluralité d'équipements domotiques connectés, en fonction des valeurs de caractéristiques mémorisées, et une comparaison des scores globaux calculés, l'équipement de liaison de communication ayant un score global associé maximal.

Le procédé comporte en outre une étape d'envoi d'une commande de maintien de canal de communication audit équipement de liaison de communication déterminé.

Le procédé comporte en outre une étape d'envoi d'une commande de déconnexion à destination de tous les équipements domotiques connectés différents de l'équipement de liaison de communication déterminé.

L'équipement de liaison de communication déterminé met en œuvre une fonction de liaison de communication comportant :
- une réception d'une requête contenant une commande, une mise à jour ou une information, destinée à au moins un équipement domotique connecté destinataire,
- une transmission de ladite requête audit au moins un équipement domotique connecté destinataire.

L'équipement de liaison de communication déterminé met en œuvre une fonction de liaison de communication comportant :
- une réception d'un message d'événement contenant une information de présence d'une commande, d'une mise à jour ou d'une information, destinée à au moins un équipement domotique connecté destinataire,
- une transmission d'un message d'information audit au moins un équipement domotique connecté destinataire, et ledit équipement domotique connecté destinataire met en œuvre, suite à une réception dudit message d'information, un canal de communication direct avec ledit équipement distant.

Selon un deuxième aspect, l'invention concerne un système de mutualisation de la communication entre des équipements domotiques connectés à un premier réseau de communication et un équipement distant connecté à un deuxième réseau de communication, le premier réseau de communication étant connecté au deuxième réseau de communication par un équipement réseau adapté à permettre une communication entre au moins un équipement domotique connecté du premier réseau et ledit équipement distant. Ce système de mutualisation de la communication comporte des modules adaptés à mettre en oeuvre :
- une détermination d'un équipement de liaison de communication parmi les équipements domotiques connectés du premier réseau de communication, en fonction d'au moins une caractéristique desdits équipements domotiques connectés, et
- un maintien par ledit équipement de liaison de communication d'un canal de communication entre le premier réseau de communication et l'équipement distant à travers ledit équipement réseau au profit des autres équipements domotiques connectés du premier réseau de communication.

Selon une caractéristique, chaque équipement domotique connecté appartenant au premier réseau de communication comprend un module de détermination d'un équipement de liaison de communication.

Selon une caractéristique, l'équipement distant comprend un module de détermination d'un équipement de liaison de communication.

D'autres caractéristiques et avantages de l'invention ressortiront de la description qui en est donnée ci-dessous, à titre indicatif et nullement limitatif, en référence aux figures annexées, parmi lesquelles :
- la figure 1 est une illustration schématique d'un système de mutualisation de la communication entre des équipements domotiques connectés appartenant à un premier réseau de communication et un équipement distant d'un deuxième réseau de communication selon un mode de réalisation ;
- la figure 2 est une représentation schématique d'un équipement domotique connecté appartenant au premier réseau de communication ;
- la figure 3 est un synoptique des principales étapes d'un procédé de mutualisation de la communication selon un premier mode de mise en œuvre de l'invention ;
- la figure 4 est un synoptique des principales étapes d'un procédé de mutualisation de la communication selon un deuxième mode de mise en œuvre de l'invention ;
- la figure 5 est un synoptique des principales étapes d'une mise en œuvre de la liaison de communication selon un premier mode de mise en oeuvre ;
- la figure 6 est un synoptique des principales étapes d'une mise en œuvre de la liaison de communication selon un deuxième mode de mise en œuvre.

L'invention sera décrite ci-après plus particulièrement dans le contexte d'une installation domotique pour bâtiments à usage commercial, industriel ou résidentiel, qu'ils soient individuels ou collectifs.

Une installation domotique comporte une pluralité d'équipements domotiques connectés qui sont des équipements électriques commandables visant à assurer des fonctions de confort et de gestion d'énergie, comme le chauffage, la ventilation et la climatisation, mais aussi de gestion de l'éclairage et de pilotage des ouvrants, tels que des stores ou des volets roulants placés devant des fenêtres du bâtiment ou encore de la sécurisation à distance par contrôle de systèmes de fermetures (portes, serrures) ou de systèmes de surveillance. Les automatismes sont les ensembles de règles qui régissent la commande des équipements électriques par un système de supervision programmable, afin d'assurer un meilleur confort des occupants du bâtiment ou encore d'optimiser la consommation d'énergie.

Par la suite le terme « domotique » sera utilisé pour désigner, de façon générique, les techniques d'automatisme, d'informatique, de télécommunication afin de superviser l'ensemble des équipements qui sont installés dans un bâtiment aussi bien à usage commercial, industriel que résidentiel.

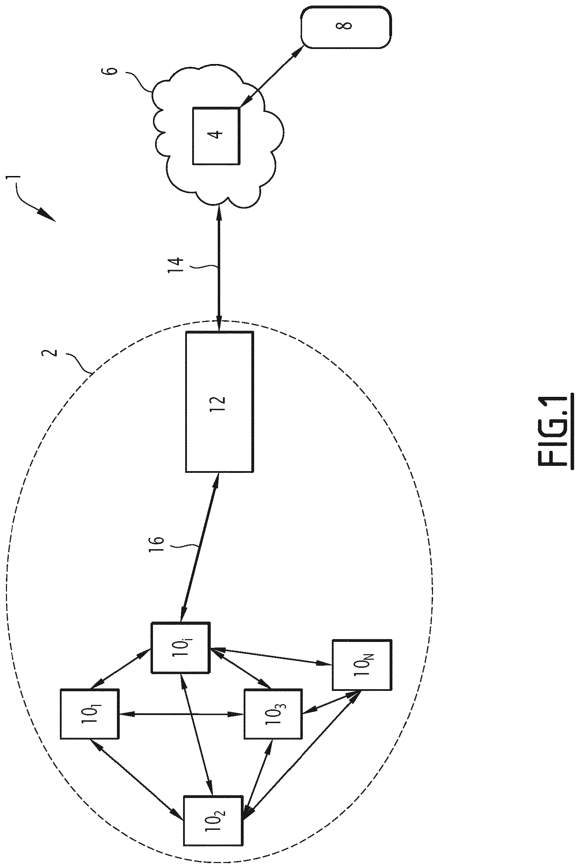

La figure 1 illustre schématiquement un système de mutualisation de la communication 1 comprenant des équipements domotiques connectés appartenant à un premier réseau de communication 2, qui est un réseau local, et au moins un équipement distant 4, comme un serveur distant, connecté à un deuxième réseau de communication 6. Le deuxième réseau de communication est un réseau étendu, par exemple le réseau Internet.

L'équipement distant 4 comprend au moins une unité de mémoire et au moins un dispositif programmable de calcul (non représentés) comme un composant logique programmable ou un circuit intégré dédié. Dans la suite de la description, on considèrera que l'équipement distant est un serveur informatique.

Un autre équipement 8, typiquement un terminal de communication ayant des capacités de connexion filaires ou sans fil, par exemple, un téléphone de type téléphone intelligent (ou « *smartphone* » en anglais) ou une tablette, est adapté à se connecter au serveur distant 4 afin de transmettre, par exemple, une ou plusieurs commandes aux équipements domotiques connectés 10₁, 10₂, 10₃, 10ᵢ, 10_{N} du premier réseau de communication 2.

Un équipement domotique connecté 10₁, 10₂, 10₃, 10ᵢ, 10_{N} peut être un actionneur agencé pour déplacer ou régler un élément du bâtiment, comme un volet roulant ou un store, ou régler un système de régulation comme un chauffage ou un système aéraulique. Il peut s'agir également d'un élément d'un système d'éclairage ou d'un système d'alarme comme un point de commande, un capteur, une caméra de vidéosurveillance ou tout autre appareil électrique commandable à distance équivalent.

Les équipements domotiques connectés 10₁, 10₂, 10₃, 10ᵢ, 10_{N} sont adaptés à communiquer entre eux, selon un protocole de communication choisi. Le protocole de communication est, par exemple, un protocole basé sur IPv4, IPv6, comme Thread ou LoRaWAN, protocoles dédiés aux équipements connectés.

Dans le mode de réalisation illustré, qui est le mode de réalisation préféré, les équipements domotiques 10₁, 10₂, 10₃, 10ᵢ, 10_{N} sont connectés entre eux selon une topologie de réseau maillé, donc sont connectés en pair-à-pair sans hiérarchie centrale. En d'autres termes, chaque couple d'équipements du premier réseau 2 est adapté à communiquer entre eux via une liaison de communication directe. Chaque équipement domotique connecté est configuré pour assurer une fonction de routage au sein du premier réseau de communication, c'est-à-dire déterminer la meilleure route à utiliser à l'intérieur du premier réseau de communication pour se connecter selon un ensemble de règles formant une table de routage.

Selon une variante non représentée, le premier réseau de communication est un réseau de type hiérarchique, comportant plusieurs niveaux de hiérarchie, chaque niveau de hiérarchique comportant un ou plusieurs sous-réseaux. Dans ce cas, des équipements domotiques particuliers jouent un rôle de tête de sous-réseau et implémentent une fonction de routage.

Le premier réseau de communication 2 est connecté au deuxième réseau de communication 6 par l'intermédiaire d'un équipement réseau 12 particulier configuré pour mettre en œuvre notamment une fonction de traduction d'adresses (ou NAT pour « *Network Address Translation* » en anglais), et/ou une fonction de protection ou pare-feu.

La fonction de traduction d'adresses permet d'effectuer une correspondance entre les adresses réseau locales (ou adresses privées) des équipements domotiques connectés, utilisées pour communiquer entre équipement à l'intérieur du premier réseau 2, et une adresse réseau globale (ou adresse publique) permettant d'identifier le ou chaque équipement connecté au deuxième réseau étendu 6.

L'équipement réseau 12 peut également être configuré pour assurer une fonction de modem (pour modulateur/démodulateur) et/ou une fonction de commutateur réseau (ou « *switch* » en anglais) et/ou une fonction de concentrateur réseau (ou « *hub* » en anglais) et/ou une fonction de routage. L'équipement réseau 12 est connecté de manière permanente, par une liaison de communication 14, au deuxième réseau de communication 6.

Dans un système de mutualisation de communication 1 selon l'invention, un équipement domotique connecté particulier du premier réseau 2, qui est l'équipement 10ᵢ dans l'exemple illustré, est sélectionné comme équipement de liaison de communication. L'équipement de liaison de communication a notamment pour fonction de maintenir actif un canal de communication 16 permanent avec le serveur distant 4 via l'équipement réseau 12 et par conséquent avec le deuxième réseau de communication. En particulier, l'équipement de liaison de communication 10 maintient un canal de communication actif avec le serveur distant 4.

Avantageusement, dans une installation domotique, le serveur 4 implémente des services de contrôle et/ou de supervision des équipements domotiques du premier réseau 2, par exemple, des commandes d'activation/désactivation d'alarme, de verrouillage/déverrouillage de porte, de mise en fonction ou arrêt de chauffage ou de climatisation, de mise en fonctionnement de stores ou volets roulants, etc.

Avantageusement, un utilisateur autorisé peut, via l'équipement 8, se connecter au serveur 4 et commander et/ou contrôler l'installation domotique à distance, transmettre des informations de mise à jour, ou recevoir des informations ou alertes relatives à l'installation domotique, par exemple une alerte relative à une alarme d'intrusion.

Selon l'invention, le contrôle et la supervision de l'installation domotique, et donc de chacun des équipements domotiques connectés 10₁, 10₂, 10₃, ... 10ᵢ, ... 10_{N} (N représentant de nombre d'équipement connecté appartenant au premier réseau de communication et i un indice compris entre 1 et N) s'effectue par l'intermédiaire du canal de communication maintenu actif par l'équipement de de liaison communication 10ᵢ sélectionné comme expliqué plus en détail ci-après.

Dans un mode de réalisation, chaque équipement domotique connecté 10₁, 10₂, 10₃, 10ᵢ, 10_{N} est adapté à se connecter au serveur distant 4 via l'équipement réseau 12 et le deuxième réseau de communication par un canal de communication direct.

Le système de mutualisation de la communication comporte un ou plusieurs modules adaptés à mettre en œuvre le procédé de mutualisation de la communication entre des équipements domotiques connectés 10₁, 10₂, 10₃, 10₁, 10_{N} appartenant au premier réseau de communication 2 et un équipement distant 4, par exemple un serveur distant 4, connecté au deuxième réseau de communication 6. Le module peut être intégré dans chaque équipement domotique connecté du premier réseau de communication et/ou dans le serveur distant 4.

Suivant un mode de réalisation, le module est un ou plusieurs microprocesseurs, processeurs ou tous autres moyens équivalents programmés de façon opportune.

Au moins un module est notamment adapté à déterminer un équipement de liaison de communication parmi les équipements domotiques connectés du premier réseau de communication, en fonction d'au moins une caractéristique des équipements domotiques connectés. Au moins un module est adapté au maintien d'un canal de communication entre le premier réseau de communication et le serveur 4 via l'équipement réseau 12.

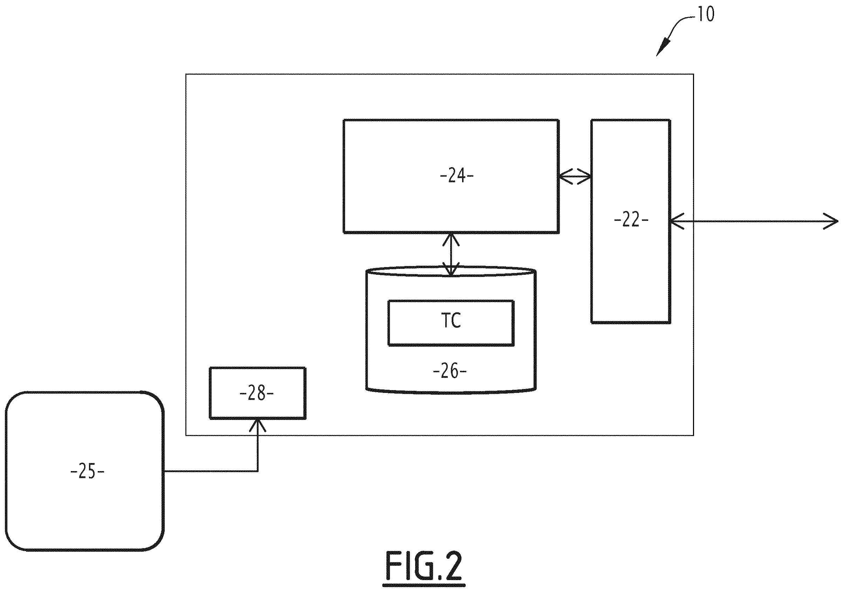

La figure 2 illustre schématiquement un équipement domotique générique 10, destiné à être connecté au premier réseau de communication 2.

Le premier réseau de communication 2 est un réseau de communication filaire ou sans fil.

L'équipement domotique 10 comporte au moins une interface réseau 22 configurée pour être connectée à au moins une interface réseau d'un autre équipement domotique 10 et/ou celle de l'équipement réseau 12. L'interface réseau 22 est adaptée à émettre et/ou recevoir un signal électrique ou électromagnétique, permettant de réaliser respectivement une connexion au réseau de communication filaire ou sans fil.

L'équipement domotique connecté 10 comporte également un dispositif programmable de calcul 24, comportant un ou plusieurs processeurs ou microprocesseur, et au moins une unité de mémoire électronique 26, adaptées à enregistrer des données. Selon un mode de réalisation, une unité de mémoire 26 est intégrée au dispositif programmable de calcul 24. Le dispositif programmable de calcul 24 est, par exemple, un composant logique programmable ou un circuit intégré dédié.

Le dispositif programmable de calcul 24 est adapté à mettre en œuvre des instructions de code de programme permettant d'exécuter des étapes du procédé de mutualisation de la communication selon l'invention. Ces instructions de code de programme sont, par exemple, être enregistrées dans l'unité de mémoire 26 de l'équipement domotique 10.

L'équipement domotique 10 comporte également un module d'alimentation électrique 28, adapté à fournir de l'énergie électrique à l'équipement domotique 10.

Dans l'exemple illustré, le module d'alimentation électrique 28 est connecté à une source d'énergie électrique 25, comme un réseau de distribution d'énergie électrique ou un ou plusieurs panneaux photovoltaïques. En variante, le module d'alimentation électrique 28 est une source d'énergie électrique autonome, comme un moyen de stockage physico-chimique. Il peut s'agir par exemple, d'une batterie d'accumulateurs, d'une pile rechargeable, d'un supercondensateur ou de tout autre type d'élément équivalent. Le module d'alimentation électrique 28 est destiné à être chargé à partir de l'énergie électrique par une source d'énergie électrique externe 25.

Dans un mode de mise en œuvre, le procédé de l'invention est mis en œuvre par des modules d'instructions de code exécutable, enregistrées sur un support lisible par ordinateur, par exemple un disque optique, un disque magnéto-optique, une mémoire ROM, une mémoire RAM, une mémoire non volatile (EPROM, EEPROM, FLASH, NVRAM), une carte magnétique ou optique.

En variante les modules d'instructions de code exécutable selon l'invention sont exécutés par au moins un composant logique programmable tel qu'un FPGA (pour *Field Programmable Gate Array*), ou encore sous forme de circuit intégré dédié tel qu'un ASIC (pour *Application Specific Integrated Circuit*).

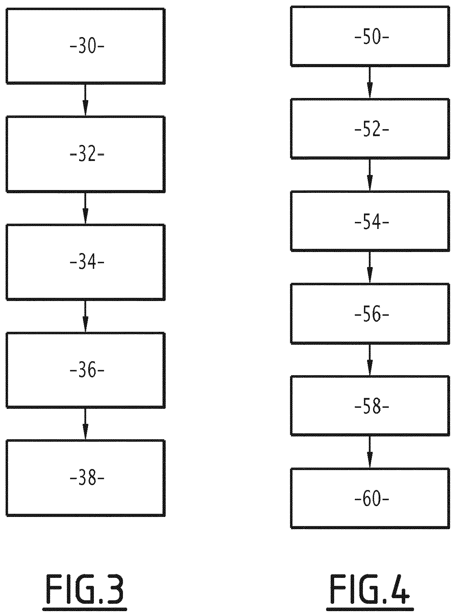

Le procédé de mutualisation de communication entre les équipements domotiques connectés du premier réseau de communication 2 et un équipement distant appartenant au deuxième réseau de communication va être décrit en référence aux figures 3 à 6.

Le premier réseau de communication 2 peut être un réseau de communication maillé, hiérarchique, en étoile ou de tout autre type de topologie.

Avantageusement, la détermination de l'équipement de liaison de communication selon l'un des deux modes de mise en œuvre décrits est mise en œuvre dynamiquement, par exemple, dès que l'équipement de liaison de communication 10ᵢ subit un changement, par exemple une panne, un débranchement, une perte de connexion avec le premier réseau de communication ou dès qu'un nouvel équipement domotique est connecté au premier réseau, ou encore, à des intervalles temporels réguliers.

Suivant un mode de réalisation, chaque équipement domotique connecté 10 est configuré pour établir une liaison de communication avec le serveur distant 4 lors de sa connexion au premier réseau de communication 2.

La figure 3 est un synoptique des principales étapes d'un premier mode de mise en œuvre de l'invention. Les étapes 30 à 34 décrites ci-après sont mises en œuvre par les équipements domotiques connectés 10 du premier réseau de communication 2. Dans ce premier mode de mise en œuvre, chaque équipement domotique connecté appartenant au premier réseau de communication est adapté à mettre en œuvre le procédé de mutualisation de la communication.

Le procédé comporte une première étape 30 de découverte des équipements domotiques connectés appartenant au premier réseau de communication 2.

Lors de l'étape 30 de découverte, au moins un équipement domotique connecté transmet une requête de découverte à destination de chaque équipement domotique connecté appartenant au premier réseau de communication 2. La requête peut être émise selon un mode de communication multidiffusion (ou « *broadcast* » en anglais).

En retour, au moins équipement domotique connecté du premier réseau de communication transmet un message contenant un ensemble d'informations caractéristiques locales à destination de l'équipement domotique émetteur de la requête de découverte.

Chaque ensemble d'informations caractéristiques est reçu par l'équipement domotique émetteur de la requête de découverte puis mémorisé lors d'une étape de mémorisation 32 dans son unité de mémoire 26. Suivant un mode de mise en œuvre, chaque ensemble d'informations caractéristiques est mémorisée sous la forme d'une table de caractéristiques TC des équipements domotiques du premier réseau.

Lors de l'étape de découverte, l'équipement émetteur de la requête de découverte transmet également ses d'informations caractéristiques locales propres à destination des autres équipement domotique connectés. Les informations caractéristiques de l'équipement domotique émetteur peuvent également être enregistrées au cours de l'étape de mémorisation 32, par exemple, sous la forme d'une table de caractéristiques TC.

L'ensemble d'informations comprend, pour un équipement domotique connecté 10ⱼ (j représentant un indice compris entre 1 et N) :
- un identifiant de l'équipement domotique 10ⱼ dans le premier réseau de communication,
- une adresse réseau locale, et
- des valeurs de caractéristiques dans un ensemble de caractéristiques prédéterminé, comportant notamment :
   - une caractéristique de type d'alimentation électrique, parmi par exemple une alimentation par réseau de distribution d'énergie électrique, par panneaux photovoltaïques, par alimentation autonome (e.g. batterie) ;
   - une caractéristique de capacité de calcul embarquée, par exemple selon le type de processeur de l'équipement ;
   - une caractéristique de qualité de service, par exemple l'implémentation d'une fonction de routage pour le premier réseau ;
   - une caractéristique de position spatiale dans le premier réseau de communication, par exemple une position centrale ou périphérique ;
   - au moins une caractéristique de performance radiofréquence comme une mesure de la puissance de réception (ou RSSI pour « *Received Signal Strength Indication* » en anglais), une qualité de signal, un niveau de puissance d'émission ;
   - au moins une caractéristique de d'environnement comme un niveau de pollution radiofréquence, un niveau de perturbation électromagnétique.

L'ensemble de caractéristiques listées ci-dessus n'est pas exhaustif.

Certaines des caractéristiques peuvent être calculées par l'équipement domotique connecté, par exemple, à l'aide de son dispositif programmable de calcul, par exemple lors de la première connexion au réseau de communication et/ou lors de la réception d'un message de découverte.

Une partie de l'ensemble de caractéristiques peut être renseignée en usine ou lors de l'installation et de la connexion, dans le premier réseau de communication, de l'équipement domotique 10j, par exemple par l'opérateur d'installation. Elles peuvent être mémorisées dans une unité de mémoire 26 de l'équipement domotique 10ⱼ. Il peut s'agir, par exemple, de caractéristiques invariantes comme le type d'alimentation ou la capacité de calcul de l'équipement domotique. De façon avantageuse cette mémorisation permet d'éviter un calcul à chaque réception d'une requête de découverte ou à chaque émission d'une telle requête.

La requête de découverte est émise au moins une fois lors de la mise sous tension et connexion au premier réseau de communication d'un équipement domotique 10ⱼ.

L'équipement domotique connecté 10 met en œuvre ensuite une étape 34 de détermination d'un équipement de liaison de communication 10ᵢ parmi tous les équipements domotiques connectés 10ⱼ du premier réseau, listés dans la table de caractéristiques TC.

L'équipement de liaison de communication 10ᵢ est sélectionné en fonction d'au moins une caractéristique des équipements domotiques 10ⱼ connectés.

De préférence, l'équipement domotique sélectionné pour être équipement de liaison de communication est alimenté en électricité par un réseau de distribution d'énergie électrique, occupe une position centrale dans le premier réseau de communication et intègre une fonction de routage. De façon avantageuse, un tel équipement domotique connecté n'est pas limité en énergie électrique par l'autonomie de son moyen de stockage physico-chimique. De plus, sa position centrale dans le premier réseau de communication permet de limiter les temps de parcours des messages échangés entre l'équipement de liaison de communication et le ou les autres l'équipement domotique connectés.

Par exemple, dans un mode de mise en œuvre, pour chaque équipement domotique 10ⱼ listé dans la table des caractéristiques TC, le dispositif programmable de calcul 24 lit dans l'unité de mémoire 26 chaque caractéristique et lui associe un score.

Par exemple, pour la première caractéristique de type d'alimentation électrique le dispositif programmable de calcul 24 associe un premier score S1 : un score maximal à un équipement alimenté par une connexion au réseau de distribution d'énergie électrique, un score moyen alimenté par des panneaux photovoltaïques et un score bas à un équipement autonome.

Les scores sont des valeurs numériques prédéterminées, par exemple, enregistrées dans une unité de mémoire 26 de l'équipement domotique connecté.

Pour la deuxième caractéristique de capacité de calcul embarquée, le dispositif programmable de calcul 24 associe un deuxième score S2 en lien avec le type de processeur embarqué.

Pour la troisième caractéristique de qualité de service, le dispositif programmable de calcul 24 associe un troisième score S3, qui est maximal pour les équipements domotiques qui implémentent une fonction de routage pour le premier réseau.

Pour la quatrième caractéristique de position spatiale dans le premier réseau, le dispositif programmable de calcul 24 calcule un barycentre spatial du premier réseau, et associe un quatrième score S4, inversement propositionnel à la distance entre l'équipement domotique et le barycentre spatial. Par exemple, le dispositif programmable de calcul 24 attribue un score maximal un équipement domotique situé à moins d'une distance prédéterminée du barycentre spatial.

Des calculs similaires sont effectués afin de déterminer le score S5, S6 associé respectivement à la caractéristique de performance radiofréquence et d'environnement.

Ensuite, le dispositif programmable de calcul 24 calcule un score global associé à chaque équipement domotique 10ⱼ, par exemple égal à la moyenne ou à une moyenne pondérée par des coefficients de pondération variables des scores S1 à S6 préalablement attribués. L'utilisation de coefficients de pondération différents permet d'associer une priorité à certaines caractéristiques, par exemple de prioriser la caractéristique de type d'alimentation.

Suivant un mode de mise en œuvre, chaque équipement domotique connecté enregistre son score global dans son unité de mémoire électronique 26.

Finalement, c'est l'équipement domotique 10ᵢ ayant obtenu un score global maximal qui est sélectionné comme équipement de liaison de communication.

De façon avantageuse, la prise en compte des caractéristiques d'environnement pour déterminer l'équipement de liaison de communication 10ᵢ permet de limiter la probabilité d'obtenir un même score global pour deux équipements domotiques connectés. En effet, deux équipements domotiques connectés peuvent être semblables et proches à l'intérieur du premier réseau de communication mais pas dans le même environnement et sont donc soumis, par exemple, à des perturbations électromagnétiques différentes.

Si plusieurs équipements domotiques connectés obtiennent un même score global qui est le score maximal, chacun de ces équipements connectés assure le rôle d'équipement de liaison de communication jusqu'à une nouvelle détermination des scores globaux.

Si par la suite, une nouvelle détermination d'un équipement de liaison de communication est effectuée, par exemple suite à la connexion d'un nouvel équipement domotique connecté ou à l'écoulement d'une durée prédéterminée, les caractéristiques d'environnement des équipements domotiques connectés auront changé et l'un des équipements domotiques connectés aura un score global supérieur aux autres et deviendra le nouvel équipement de liaison de communication.

Les équipements domotiques connectés non sélectionnés désactivent, à l'étape 36, le cas échéant, le canal de communication préalablement établi avec le serveur distant 4 via l'équipement réseau 12. Par exemple, lorsque le protocole UDP est mis en œuvre, la désactivation du canal de communication consiste à ne plus envoyer de paquet élémentaire de maintien de connexion avec le serveur distant et attendre l'expiration de la durée prédéterminée (« timeout »).

L'équipement de liaison de communication sélectionné met en œuvre et maintient actif (étape 38) un canal de communication avec le serveur distant 4.

Lors de l'étape 38, l'équipement de liaison de communication 10ᵢ maintient le canal de communication actif, par exemple, par l'envoi régulier de paquets élémentaires de petite taille, également appelés paquets de maintien de connexion (en anglais « *keep alive packets* »), en l'absence de trafic réseau, de manière à maintenir le « trou » de communication via l'équipement réseau 12 actif selon le protocole UDP.

Au cours de de l'étape 38, l'équipement de liaison de communication 10ᵢ redistribue les messages reçus du serveur distant vers le ou les équipements domotiques destinataires du premier réseau, et/ou transmet des messages en multidiffusion (ou « *broadcast* » en anglais) à travers le premier réseau de communication.

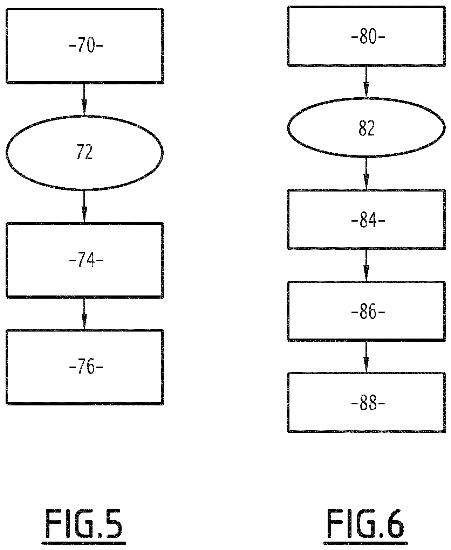

Deux modes de mise en œuvre de l'étape 38 seront décrits ci-après en référence aux figures 5 et 6.

Le procédé de mutualisation de communication peut être mis en œuvre par un ou plusieurs équipements domotiques connectés particulier ou par chaque équipement domotique connecté du premier réseau de communication 2.

Suivant un mode de mise en œuvre du procédé de mutualisation de la communication, lorsqu'un ou plusieurs nouveaux équipements domotiques se connectent au premier réseau de communication, chacun des nouveaux équipements domotiques établit une liaison de communication avec le serveur distant afin de pouvoir dialoguer avec ce dernier.

Une étape 30 de découverte est ensuite mise en œuvre par chacun des nouveaux équipements domotiques. En réponse à chacune des requêtes de découverte, l'équipement de liaison de communication et chacun des nouveaux équipements domotiques autres que l'émetteur de la requête transmettent leurs informations caractéristiques locales.

Les informations caractéristiques locales sont ensuite enregistrées au cours d'une étape 32 de mémorisation puis une étape 34 de détermination d'un équipement de liaison de communication sont mises en œuvre par chaque nouvel équipement domotique ainsi que par l'équipement de liaison de communication précédemment sélectionné.

Suite au calcul des scores globaux, chaque équipement domotique connecté, parmi l'équipement de liaison de communication précédemment sélectionné et les nouveaux équipements domotiques, compare son score global aux autres scores globaux calculés afin de savoir s'il peut déléguer sa liaison de communication avec le serveur distant à un autre équipement domotique connecté ayant un score global supérieur. Si un tel équipement est trouvé, l'équipement domotique connecté désactive son canal de communication avec le serveur distant lors d'une étape 36. Si aucun autre équipement domotique connecté n'a un score global supérieur à celui de l'équipement domotique connecté considéré, l'équipement domotique connecté considéré maintient son canal de communication avec le serveur distant (étape 38), et devient l'équipement de liaison de communication.

Dans un cas particulier, si plusieurs équipements domotiques connectés ont un même score global maximal, chacun de ces équipements domotiques connectés devient équipement de liaison de communication.

Suivant une variante, suite à l'émission d'au moins une requête de découverte, chacun des équipements domotiques connectés appartenant au premier réseau de communication répond à la au moins une requête puis met en œuvre les étapes 32 à 38 précédemment décrites. Suite à la réception d'une requête de découverte chaque équipement domotique peut établir un canal de communication avec le serveur distant. Suivant une variante de mise en œuvre, l'équipement sélectionné comme équipement de liaison de communication établit un canal de communication avec le serveur distant au cours de l'étape 38, s'il n'est pas déjà connecté de façon directe au serveur distant puis le maintient actif au profit des autres équipements domotiques connectés du premier réseau de communication.

Suivant un autre mode de mise en œuvre, lorsque le premier réseau de communication perd l'équipement de liaison de communication, par exemple, suite à une panne de ce dernier, son débranchement, une perte de connexion avec le premier réseau de communication, chaque équipement domotique connecté du premier réseau de communication établit un canal de communication avec le serveur distant et met en œuvre le procédé de mutualisation de la communication.

Suivant une variante de mise en œuvre, chaque équipement domotique connecté du premier réseau de communication met en œuvre le procédé de mutualisation de la communication puis l'équipement domotique sélectionné comme équipement de liaison de communication établit un canal de communication avec le serveur distant et le maintient actif au profit des autres équipements domotiques connectés du premier réseau de communication.

La figure 4 est un synoptique des principales étapes du procédé de mutualisation de la communication dans un deuxième mode de mise en œuvre de l'invention. Les étapes 50 à 58 du procédé sont mises en œuvre par le serveur distant 4.

On suppose que tout ou partie des équipements domotiques connectés 10₁,..., 10_{N}, du premier réseau de communication 2 maintiennent chacun actif un canal de communication avec le serveur distant 4.

Un canal de communication peut avoir été établi avec le serveur distant par tous les équipements domotiques connectés 10₁,..., 10_{N}, du premier réseau de communication suite à la connexion d'un ou plusieurs nouveaux équipements domotiques au réseau de communication ou suite à la perte de l'équipement de liaison de communication précédemment sélectionné. Suivant une variante, un canal de communication peut avoir été établi avec seulement l'équipement de liaison de communication et le ou les nouveaux équipements domotiques connectés.

Au cours d'une étape 50 de découverte, le serveur distant 4 émet une requête de découverte à destination de tous les équipements domotiques connectés appartenant au premier réseau de communication 2. En réponse, chaque équipement domotiques connectés 10j transmet au serveur un message de découverte comprenant un ensemble d'informations caractéristiques globales. Le serveur distant 4 reçoit lors d'une étape de réception 52 l'ensemble d'informations caractéristiques globales de chaque équipement domotique connecté 10ⱼ du premier réseau. Cet ensemble d'informations comprend, pour l'équipement domotique connecté 10ⱼ :
- un identifiant de l'équipement domotique dans le premier réseau,
- une adresse réseau globale, et
- des valeurs de caractéristiques dans un ensemble de caractéristiques prédéterminé.

L'ensemble de caractéristiques est le même que celui décrit précédemment en référence à la figure 3.

Le serveur 4 mémorise dans une unité de mémoire, lors de l'étape 52, l'ensemble d'informations caractéristiques globales reçues de chaque équipement domotique connecté, par exemple sous forme d'une table de caractéristiques analogue à la table TC décrite précédemment.

Le serveur 4 met en œuvre, par exemple à l'aide de son dispositif programmable de calcul, une étape 54 de détermination d'un équipement de liaison de communication 10ᵢ parmi tous les équipements domotiques connectés 10ⱼ du premier réseau, listés dans la table de caractéristiques. L'étape 54 est analogue à l'étape 34 décrite précédemment.

A l'issue de l'étape 54, un équipement de liaison de communication 10ᵢ est sélectionné en fonction d'au moins une valeur des caractéristiques associées et/ou des scores attribués.

Ensuite le serveur, distant émet, lors de l'étape d'envoi 56, une commande de déconnexion à destination de tous les équipements domotiques connectés 10ⱼ maintenant actif un canal de communication avec le serveur distant et différents de l'équipement de liaison de communication 10ᵢ. Suite à la réception de la commande chaque l'équipement domotique destinataire se déconnecte du serveur, par exemple en transmettant à ce dernier un signal spécifique ou en cessant de transmettre les paquets de maintien de connexion.

Le serveur envoie également lors d'une étape d'envoi 58 une commande destinée à maintenir le canal de communication actif à destination de l'équipement de liaison de communication 10ᵢ, de manière à informer cet équipement de son rôle de maintien de la liaison de communication mutualisée au profit des autres équipements domotiques connectés.

Par la suite, lors de l'étape 60, l'équipement de liaison de communication effectue le maintien actif du canal de communication, de manière analogue à l'étape 38 préalablement décrite.

Suivant un mode de mise en œuvre, lors du maintien actif du canal de communication avec le serveur distant 4 (étape 38 ou 60), l'équipement de liaison de communication diffuse, à intervalle de temps régulier, un message d'information à destination des autres équipements domotiques connectés 10, 10₁, 10₂, 10₃, 10_{N} indiquant qu'il est en service et qu'il est connecté au serveur distant. Le message d'information peut être émis sur le premier réseau de communication 6 suivant un mode de communication multidiffusion. Ainsi, les autres équipements domotiques connectés appartenant au premier réseau de communication 2 peuvent, s'ils ne reçoivent pas le message d'information, être informés de la perte de la liaison mutualisée avec le serveur distant 4.

Suivant un mode de mise en œuvre, l'équipement de liaison de communication 10ᵢ transmet, aux autres équipements domotiques connectés, un message afin de les informer que le canal de communication direct avec le serveur distant est interrompu et qu'il n'arrive plus à établir la connexion avec le serveur distant. Par exemple, le message est émis sur le premier réseau de communication 2 suivant un mode de communication multidiffusion. Ainsi, les autres équipements domotiques connectés peuvent alors également essayer de joindre le serveur distant afin d'établir un canal de communication avec ce dernier et, en cas de réussite, mettre en œuvre le procédé de mutualisation de la communication entre les équipements domotiques connectés afin de déterminer un nouvel équipement de liaison de communication.

Les figures 5 et 6 illustrent deux variantes de de l'étape 38 ou 60 de liaison de communication mise en œuvre par l'équipement de liaison de communication sélectionné. Au cours de cette étape 38, 60, en absence de trafic réseau, l'équipement de liaison de communication 10ᵢ transmet au serveur distant des paquets de maintien de connexion à destination du serveur distant. Chaque paquet de maintien de connexion est espacé d'un intervalle de temps d'une durée inférieure à la durée prédéterminée (« timeout »).

Selon une première variante, décrite en référence à la figure 5, le serveur distant 4 envoie (étape 70) à l'équipement de liaison de communication 10ᵢ une requête 72 contenant, par exemple, une commande, un message de contrôle, un message de mise à jour ou une information, destiné à un équipement domotique connecté destinataire 10ₖ (k représentant un indice compris entre 1 et N) ou à une pluralité d'équipements domotiques connectés destinataires. La requête comporte, par exemple, le ou les identifiants des équipements domotiques connectés destinataires.

L'équipement de liaison de communication 10ᵢ reçoit la requête 72 lors de l'étape de réception 74, et transmet au cours de l'étape de redistribution 76 la requête ou la commande à exécuter à l'équipement ou aux équipements connectés destinataires.

Selon une deuxième variante, décrite en référence à la figure 6, le serveur 4 envoie (étape 80) à l'équipement de liaison de communication 10ᵢ un message d'événement 82 destiné à informer l'équipement de liaison de communication 10ᵢ que le serveur 4 a un message, par exemple une commande, un message de contrôle, un message de mise à jour, une demande d'information, pour un ou plusieurs équipements domotiques destinataires, ces équipements domotiques destinataires étant identifiés dans le message d'événement 82.

L'équipement de liaison de communication 10ᵢ reçoit le message d'événement 82 à l'étape de réception 84, et transmet un message d'information correspondant à l'équipement ou aux équipements domotique(s) connecté(s) destinataire(s) à l'étape de transmission 86.

En variante, l'équipement de liaison de communication 10ᵢ transmet le message d'information en utilisant une communication de type multidiffusion lors de l'étape de transmission 86.

A la réception de ce message d'information, le ou les équipements domotiques destinataires établissent chacun, au cours de l'étape 88, un canal de communication direct avec le serveur distant 4 afin d'établir une session de communication sécurisée avec ce dernier.

Cette deuxième variante présente l'avantage d'améliorer la sécurité des communications. En effet, avantageusement, le message d'événement 82 envoyé par le serveur 4 à l'équipement de liaison de communication est « allégé » par rapport à la requête 72 décrite précédemment, car il ne comprend pas de données détaillées relatives à la commande à exécuter par exemple, ou aux informations demandées.

De plus, les informations et/ou les commandes à exécuter potentiellement sensibles (par exemple, la désactivation d'une alarme, le déverrouillage d'un accès, etc) sont échangées à travers une liaison sécurisée entre le serveur et l'équipement destinataire. Le message d'événement transmis par le serveur 4 ne contient pas de données sensibles, et donc est plus difficile à pirater au niveau du réseau local. Les éventuelles données sensibles sont ensuite échangées sur un canal de communication qui peut être sécurisé entre l'équipement domotique concerné du premier réseau de communication local et le serveur distant.

Cette deuxième variante de mise en œuvre permet également de faciliter la sécurisation des liaisons de données entre le serveur distant et les équipements domotiques appartenant au premier réseau de communication 2. En effet, il est plus facile de réaliser une liaison de communication sécurisée entre un équipement domotique connecté du réseau local et le serveur distant plutôt que de sécuriser une liaison de communication entre deux ou plusieurs équipements domotiques connectés appartenant au premier réseau de communication 2.

Un autre avantage de la deuxième variante de mise en œuvre est de réaliser une communication plus directe sans faire intervenir un équipement domotique connecté tiers.

## Revendications

1. Procédé de mutualisation de la communication entre des équipements domotiques connectés appartenant à un premier réseau de communication (2) et un équipement distant (4) connecté à un deuxième réseau de communication (6), le premier réseau de communication (2) étant connecté au deuxième réseau de communication (6) par un équipement réseau (12), l'équipement réseau (12) étant adapté à permettre une communication entre au moins un équipement domotique connecté du premier réseau de communication (2) et ledit équipement distant (4), le procédé comportant:
- une détermination (36, 54) d'un équipement de liaison de communication (10ᵢ) parmi les équipements domotiques connectés du premier réseau de communication, en fonction d'au moins une caractéristique desdits équipements domotiques connectés, et
- un maintien (38, 60) par ledit équipement de liaison de communication (10ᵢ) d'un canal de communication entre le premier réseau de communication (2) et l'équipement distant (4) à travers ledit équipement réseau (12) au profit des autres équipements domotiques connectés du premier réseau de communication (2).

2. Procédé selon la revendication 1, dans lequel le maintien (38) d'un canal de communication comporte un envoi régulier de paquets élémentaires de maintien de connexion par ledit équipement de liaison de communication (10ᵢ) vers l'équipement distant (4).

3. Procédé selon l'une des revendications 1 ou 2, dans lequel la détermination (36, 54) d'un équipement de liaison de communication (10ᵢ) dépend d'au moins une caractéristique parmi l'ensemble de caractéristiques comportant une caractéristique de type d'alimentation électrique, une caractéristique de capacité de calcul embarquée, une caractéristique de qualité de service, une caractéristique de position spatiale dans le premier réseau de communication (2), une caractéristique relative à l'environnement radiofréquence.

4. Procédé selon la revendication 3, dans lequel chaque équipement domotique connecté (10₁,.. ,10i, ... 10_{N}) appartenant au premier réseau de communication (2) effectue la détermination d'un équipement de liaison de communication (10ᵢ) parmi les équipements domotiques connectés et met en œuvre :
- une réception (30) d'un message de découverte provenant d'au moins un autre équipement domotique connecté appartenant audit premier réseau de communication (2) et comprenant un identifiant dudit autre équipement domotique connecté et une valeur de caractéristique associée à chaque caractéristique dudit ensemble de caractéristiques pour ledit autre équipement domotique connecté,
- une mémorisation (32) des valeurs de caractéristiques reçues dans une table de caractéristiques,
- une détermination de l'équipement de liaison de communication (10ᵢ) en fonction des valeurs de caractéristiques mémorisées dans la table de caractéristiques.

5. Procédé selon la revendication 4, dans lequel la détermination de l'équipement de liaison de communication (10ᵢ) comporte un calcul d'un score global associé audit au moins un autre équipement domotique connecté en fonction des valeurs de caractéristiques mémorisées et un calcul d'un score global propre, et une comparaison des scores globaux calculés, l'équipement de liaison de communication (10ᵢ) ayant un score global associé maximal.

6. Procédé selon la revendication 3, comportant des étapes, mises en œuvre par l'équipement distant (4), de :
- réception (52), en provenance d'au moins une pluralité d'équipements domotiques connectés appartenant au premier réseau de communication (2), d'un ensemble d'informations caractéristiques globales de chaque équipement domotique connecté de ladite pluralité, l'ensemble d'informations caractéristiques globales comportant un identifiant de dudit équipement domotique connecté et une valeur de caractéristique associée à chaque caractéristique dudit ensemble de caractéristiques pour ledit équipement domotique connecté,
- mémorisation (52) des valeurs de caractéristiques reçues dans une table de caractéristiques,
- calcul (54) d'un score global associé à chaque équipement domotique connecté parmi ladite pluralité d'équipements domotiques connectés, en fonction des valeurs de caractéristiques mémorisées,
- détermination (54) de l'équipement de liaison de communication (10ᵢ) en fonction des scores globaux calculés.

7. Procédé selon la revendication 6, dans lequel la détermination de l'équipement de liaison de communication (10ᵢ) comporte un calcul (54) d'un score global associé à chaque équipement domotique connecté parmi ladite pluralité d'équipements domotiques connectés, en fonction des valeurs de caractéristiques mémorisées, et une comparaison des scores globaux calculés, l'équipement de liaison de communication (10ᵢ) ayant un score global associé maximal.

8. Procédé selon l'une des revendications 6 ou 7, comportant en outre une étape d'envoi (58) d'une commande de maintien de canal de communication audit équipement de liaison de communication déterminé.

9. Procédé selon l'une des revendications 6 à 8, comportant en outre une étape d'envoi (56) d'une commande de déconnexion à destination de tous les équipements domotiques connectés (10ⱼ) différents de l'équipement de liaison de communication (10ᵢ) déterminé.

10. Procédé selon l'une quelconque des revendications 1 à 9, dans lequel l'équipement de liaison de communication déterminé (10ᵢ) met en œuvre une fonction de liaison de communication comportant :
- une réception (74) d'une requête (72) contenant une commande, une mise à jour ou une information, destinée à au moins un équipement domotique connecté destinataire (10ₖ),
- une transmission (76) de ladite requête (72) audit au moins un équipement domotique connecté destinataire.

11. Procédé selon l'une quelconque des revendications 1 à 9, dans lequel l'équipement de liaison de communication (10ᵢ) déterminé met en œuvre une fonction de liaison de communication comportant :
- une réception (84) d'un message d'événement (82) contenant une information de présence d'une commande, d'une mise à jour ou d'une information, destinée à au moins un équipement domotique connecté destinataire (10ₖ),
- une transmission (86) d'un message d'information audit au moins un équipement domotique connecté destinataire (10ₖ), et
dans lequel ledit équipement domotique connecté destinataire (10ₖ) met en œuvre (88), suite à une réception dudit message d'information, un canal de communication direct avec ledit équipement distant.

12. Système de mutualisation de la communication entre des équipements domotiques connectés appartenant à un premier réseau de communication (2) et un équipement distant (4) connecté à un deuxième réseau de communication (6), le premier réseau de communication (2) étant connecté au deuxième réseau de communication (6) par un équipement réseau (12), l'équipement réseau (12) étant adapté à permettre une communication entre au moins un équipement domotique connecté du premier réseau de communication (2) et ledit équipement distant (4), le système comportant des modules adaptés à mettre en œuvre :
- une détermination d'un équipement de liaison de communication (10ᵢ) parmi les équipements domotiques connectés (10, 10₁, 10₂, 10₃, ... 10ᵢ, ... 10_{N}) du premier réseau de communication (2), en fonction d'au moins une caractéristique desdits équipements domotiques connectés, et
- un maintien par ledit équipement de liaison de communication d'un canal de communication entre le premier réseau de communication (2) et l'équipement distant (4) à travers ledit équipement réseau (12) au profit des autres équipements domotiques connectés du premier réseau de communication (2).

13. Système de communication selon la revendication 12, dans lequel chaque équipement domotique (10, 10₁, 10₂, 10₃, 10ᵢ, 10_{N}) connecté appartenant au premier réseau de communication (2) comprend un module de détermination d'un équipement de liaison de communication.

14. Système de communication selon la revendication 12, dans lequel l'équipement distant (4) comprend un module de détermination d'un équipement de liaison de communication.

## Patentansprüche

1. Bündelungsverfahren der Kommunikation zwischen verbundenen Gebäudeautomationsgeräten, die zu einem ersten Kommunikationsnetz (2) gehören, und einem entfernten Gerät (4), das mit einem zweiten Kommunikationsnetz (6) verbunden ist, wobei das erste Kommunikationsnetz (2) über ein Netzgerät (12) mit dem zweiten Kommunikationsnetz (6) verbunden ist, wobei das Netzgerät (12) angepasst ist, um eine Kommunikation zwischen mindestens einem verbundenen Gebäudeautomationsgerät des ersten Kommunikationsnetzes (2) und dem entfernten Gerät (4) zu ermöglichen, das Verfahren umfassend:
- Bestimmen (36, 54) eines Kommunikationsverbindungsgeräts (10ᵢ) unter den verbundenen Gebäudeautomationsgeräten des ersten Kommunikationsnetzes abhängig von mindestens einem Merkmal der verbundenen Gebäudeautomationsgeräte, und
- Aufrechterhalten (38, 60), durch das Kommunikationsverbindungsgerät (10ᵢ), eines Kommunikationskanals zwischen dem ersten Kommunikationsnetz (2) und dem entfernten Gerät (4) über das Netzgerät (12) zugunsten der anderen verbundenen Gebäudeautomationsgeräte des ersten Kommunikationsnetzes (2).

2. Verfahren nach Anspruch 1, wobei das Aufrechterhalten (38) eines Kommunikationskanals ein regelmäßiges Senden von elementaren Verbindungsaufrechterhaltungspaketen durch das Kommunikationsverbindungsgerät (10ᵢ) an das entfernte Gerät (4) umfasst.

3. Verfahren nach einem der Ansprüche 1 oder 2, wobei das Bestimmen (36, 54) eines Kommunikationsverbindungsgeräts (10ᵢ) von mindestens einem Merkmal aus der Einheit von Merkmalen abhängt, umfassend ein Merkmal der Art der Stromversorgung, ein Merkmal der eingebetteten Rechenkapazität, ein Merkmal der Dienstgüte, ein Merkmal der räumlichen Position in dem ersten Kommunikationsnetz (2), ein Merkmal in Bezug auf die Funkfrequenzumgebung.

4. Verfahren nach Anspruch 3, wobei jedes verbundene Gebäudeautomationsgerät (10₁,... ,10ᵢ,... 10_{N}), das zu dem ersten Kommunikationsnetz (2) gehört, das Bestimmen eines Kommunikationsverbindungsgerät (10ᵢ) unter den verbundenen Gebäudeautomationsgeräten durchführt und Folgendes implementiert:
- Empfangen (30) einer Entdeckungsnachricht, die von mindestens einem anderen verbundenen Gebäudeautomationsgerät stammt, das zu dem ersten Kommunikationsnetz (2) gehört und eine Kennung des anderen verbundenen Gebäudeautomationsgeräts und einen Merkmalswert umfasst, der mit jedem Merkmal des Satzes von Merkmalen für das andere verbundene Gebäudeautomationsgerät assoziiert ist,
- Speichern (32) der empfangenen Merkmalswerte in einer Merkmalstabelle,
- Bestimmen des Kommunikationsverbindungsgerät (10ᵢ) abhängig von den in der Merkmalstabelle gespeicherten Merkmalswerten.

5. Verfahren nach Anspruch 4, wobei das Bestimmen des Kommunikationsverbindungsgeräts (10ᵢ) ein Berechnen einer Gesamtpunktzahl, die mit mindestens einem anderen verbundenen Gebäudeautomationsgerät assoziiert ist, basierend auf den gespeicherten Merkmalswerten und ein Berechnen einer eigenen Gesamtpunktzahl und ein Vergleichen der berechneten Gesamtpunktzahlen umfasst, wobei mit dem Kommunikationsverbindungsgerät (10ᵢ) eine maximale Gesamtpunktzahl assoziiert ist.

6. Verfahren nach Anspruch 3, umfassend folgende Schritte, die von dem entfernten Gerät (4) implementiert werden:
- Empfangen (52), von mindestens einer Vielzahl von verbundenen Heimautomationsgeräten, die zu dem ersten Kommunikationsnetz (2) gehören, eines Satzes von globalen Merkmalsinformationen von jedem verbundenen Gebäudeautomationsgerät der Vielzahl, der Satz von globalen Merkmalsinformationen umfassend eine Kennung des verbundenen Heimautomationsgeräts und einen Merkmalswert, der mit jedem Merkmal des Satzes von Merkmalen für das verbundene Gebäudeautomationsgerät assoziiert ist,
- Speichern (52) der empfangenen Merkmalswerte in einer Merkmalstabelle,
- Berechnen (54) einer Gesamtpunktzahl, die mit jedem verbundenen Heimautomationsgerät aus der Vielzahl von verbundenen Heimautomationsgeräten assoziiert ist, basierend auf den gespeicherten Merkmalswerten,
- Bestimmen (54) des Kommunikationsverbindungsgerät (10ᵢ) basierend auf den berechneten Gesamtpunktzahlen.

7. Verfahren nach Anspruch 6, wobei das Bestimmen des Kommunikationsverbindungsgeräts (10ᵢ) ein Berechnen (54) einer Gesamtpunktzahl, die mit jedem verbundenen Gebäudeautomationsgerät aus der Vielzahl von verbundenen Gebäudeautomationsgeräten assoziiert ist, basierend auf den gespeicherten Merkmalswerten und ein Vergleichen der berechneten Gesamtpunktzahlen umfasst, wobei mit dem Kommunikationsverbindungsgerät (10ᵢ) eine maximale Gesamtpunktzahl assoziiert ist.

8. Verfahren nach einem der Ansprüche 6 oder 7, ferner umfassend einen Sendeschritt (58) eines Befehls zum Aufrechterhalten des Kommunikationskanals an das bestimmte Kommunikationsverbindungsgerät.

9. Verfahren nach einem der Ansprüche 6 bis 8, ferner umfassend einen Sendeschritt (56) eines Trennungsbefehls an alle verbundenen Gebäudeautomationsgeräte (10ⱼ), die sich von dem bestimmten Kommunikationsverbindungsgerät (10ᵢ) unterscheiden.

10. Verfahren nach einem der Ansprüche 1 bis 9, wobei das bestimmte Kommunikationsverbindungsgerät (10ᵢ) eine Kommunikationsverbindungsfunktion implementiert, umfassend:
- Empfangen (74) einer Anfrage (72), die einen Befehl, eine Aktualisierung oder Informationen enthält, die für mindestens ein empfangendes verbundenes Gebäudeautomationsgerät (10ₖ) bestimmt sind,
- Übertragen (76) der Anfrage (72) an das mindestens eine empfangende verbundene Gebäudeautomationsgerät.

11. Verfahren nach einem der Ansprüche 1 bis 9, wobei das bestimmte Kommunikationsverbindungsgerät (10ᵢ) eine Kommunikationsverbindungsfunktion implementiert, umfassend:
- Empfangen (84) einer Ereignisnachricht (82), die Informationen über das Vorhandensein eines Befehls, einer Aktualisierung oder von Informationen enthält, die für mindestens ein empfangendes verbundenes Gebäudeautomationsgerät (10ₖ) bestimmt sind,
- Übertragungen (86) einer Informationsnachricht an das mindestens eine empfangende verbundene Gebäudeautomationsgerät (10ₖ), und
wobei das empfangende verbundene Gebäudeautomationsgerät (10ₖ) nach Empfangen der Informationsnachricht einen direkten Kommunikationskanal mit dem entfernten Gerät implementiert (88).

12. Bündelungssystem der Kommunikation zwischen verbundenen Gebäudeautomationsgeräten, die zu einem ersten Kommunikationsnetz (2) gehören, und einem entfernten Gerät (4), das mit einem zweiten Kommunikationsnetz (6) verbunden ist, wobei das erste Kommunikationsnetz (2) über ein Netzgerät (12) mit dem zweiten Kommunikationsnetz (6) verbunden ist, wobei das Netzgerät (12) angepasst ist, um eine Kommunikation zwischen mindestens einem verbundenen Gebäudeautomationsgerät des ersten Kommunikationsnetzes (2) und dem entfernten Gerät (4) zu ermöglichen, das System umfassend Module, die angepasst sind, um Folgendes zu implementieren:
- Bestimmen eines Kommunikationsverbindungsgeräts (10ᵢ) unter den verbundenen Gebäudeautomationsgeräten (10, 10₁, 10₂, 10₃,... 10ᵢ,... 10_{N}) des ersten Kommunikationsnetzes (2) abhängig von mindestens einem Merkmal der verbundenen Gebäudeautomationsgeräte, und
- Aufrechterhalten, durch das Kommunikationsverbindungsgerät, eines Kommunikationskanals zwischen dem ersten Kommunikationsnetz (2) und dem entfernten Gerät (4) über das Netzgerät (12) zugunsten der anderen verbundenen Gebäudeautomationsgeräte des ersten Kommunikationsnetzes (2).

13. Kommunikationssystem nach Anspruch 12, wobei jedes verbundene Gebäudeautomationsgerät (10, 10₁, 10₂, 10₃, 10ᵢ, 10_{N}), das zu dem ersten Kommunikationsnetz (2) gehört, ein Modul zum Bestimmen eines Kommunikationsverbindungsgeräts umfasst.

14. Kommunikationssystem nach Anspruch 12, wobei das entfernte Gerät (4) ein Modul zum Bestimmen eines Kommunikationsverbindungsgeräts umfasst.

## Claims

1. A communication sharing method for sharing communication between the connected home automation equipment units belonging to a first communication network (2) and a remote equipment unit (4) connected to a second communication network (6), the first communication network (2) being connected to the second communication network (6) by a network equipment unit (12), the network equipment unit (12) being adapted so as to enable the communication between at least one connected home automation equipment unit of the first communication network (2) and said remote equipment unit (4), the method comprising:
- determining (36, 54) a communication link device (10ᵢ) for establishing a communication link from among the connected home automation equipment units of the first communication network, as a function of at least one characteristic feature of said connected home automation equipment units; and
- maintaining (38, 60) by said communication link device (10ᵢ) a communication channel between the first communication network (2) and the remote equipment unit (4) through said network equipment unit (12), for the benefit of the other connected home automation equipment units of the first communication network (2).

2. A communication sharing method according to claim 1, wherein the maintaining (38) of a communication channel comprises a regular sending of elementary connection maintenance packets by said communication link device (10ᵢ) to the remote equipment unit (4).

3. A communication sharing method according to one of claims 1 or 2, wherein the determining (36, 54) of a communication link device (10ᵢ) depends on at least one characteristic feature from among the set of characteristic features comprising a characteristic feature related to type of electrical power supply, a characteristic feature related to on-board computing capacity, a characteristic feature related to quality of service, a characteristic feature related to spatial position in the first network (2), a characteristic feature related to the radio frequency environment.

4. A communication sharing method according to claim 3, wherein each connected home automation equipment unit (10₁, .., 10ᵢ,... 10_{N}) belonging to the first communication network (2) carries out the determination of a communication link device (10ᵢ) from among the connected home automation equipment units and effectively implements:
- the reception (30) of a discovery message originating from at least one other connected home automation equipment unit belonging to said first communication network (2) and comprising an identifier of said other connected home automation equipment unit and a characteristic feature value associated with each characteristic feature of said set of characteristic features for said other connected home automation equipment unit;
- the saving and storing (32) of the characteristic feature values received in a table of characteristic features;
- the determination of the communication link device (10ᵢ) as a function of the characteristic feature values saved and stored in the table of characteristic features.

5. A communication sharing method according to claim 4, wherein the determination of the communication link device (10ᵢ) comprises a calculation of an overall score associated with said at least one other connected home automation equipment unit as a function of the saved and stored characteristic feature values, and a calculation of a respective overall score, and a comparison of the calculated overall scores, the communication link device (10ᵢ) having a maximum associated overall score.

6. A communication sharing method according to claim 3, comprising the steps, implemented by the remote equipment unit (4), as follows:
- receiving (52), from at least a plurality of connected home automation equipment units belonging to the first communication network (2), of a set of global characteristic information items of each connected home automation equipment unit of said plurality, the set of global characteristic information items comprising an identifier of said connected home automation equipment unit and a characteristic feature value associated with each characteristic feature of said set of characteristic features for said connected home automation equipment unit;
- saving and storing (52) of the values of characteristic features received in a table of characteristic features;
- calculating (54) an overall score associated with each connected home automation equipment unit among said plurality of connected home automation equipment units, as a function of the saved and stored characteristic feature values;
- determining (54) the communication link device (10ᵢ) as a function of the calculated overall scores.

7. A communication sharing method according to claim 6, wherein the determination of the communication link device (10ᵢ) comprises calculating (54) an overall score associated with each connected home automation equipment unit among said plurality of connected home automation equipment units, as a function of the saved and stored characteristic feature values, and comparing the calculated overall scores, the communication link device (10ᵢ) having a maximum associated overall score.

8. A communication sharing method according to one of claims 6 or 7, further comprising a command sending step (58) for sending a command to maintain the communication channel to said determined communication link device.

9. A communication sharing method according to one of claims 6 to 8, further comprising a command sending step (56) for sending a disconnection command to all the connected home automation equipment units (10ⱼ) other than the determined communication link device (10ᵢ).

10. A communication sharing method according to any one of claims 1 to 9, wherein the determined communication link device (10ᵢ) operationally implements a communication link function comprising:
- receiving (74) a request (72) containing a command, an update, or an information item, to be sent to at least one receiving connected home automation equipment unit (10ₖ);
- transmitting (76) said request (72) to said at least one receiving connected home automation equipment unit.

11. A communication sharing method according to any one of claims 1 to 9, wherein the determined communication link device (10ᵢ) operationally implements a communication link function comprising:
- receiving (84) an event message (82) containing an information item related to the presence of a command, an update, or an information item, to be sent to at least one receiving connected home automation equipment unit (10ₖ);
- transmitting (86) an information message to said at least one receiving connected home automation equipment unit (10ₖ), and
in which said receiving connected home automation equipment unit (10ₖ) implements (88), following the reception of said information message, a direct communication channel with said remote equipment unit.

12. A communication sharing system for sharing communication between the connected home automation equipment units belonging to a first communication network (2) and a remote equipment unit (4) connected to a second communication network (6), the first communication network (2) being connected to the second communication network (6) by a network equipment unit (12), the network equipment unit (12) being adapted so as to enable the communication between at least one connected home automation equipment unit of the first communication network (2) and said remote equipment unit (4), the system comprising modules that are capable of operationally implementing:
- the determination of a communication link device (10ᵢ) for establishing a communication link from among the connected home automation equipment units (10, 101, 102, 103,... 10i,... 10N) of the first communication network (2), as a function of at least one characteristic feature of said connected home automation equipment units; and
- the maintenance by said communication link device of a communication channel between the first communication network (2) and the remote equipment unit (4) through said network equipment unit (12) for the benefit of the other connected home automation equipment units of the first communication network (2).

13. A communication system according to claim 12, wherein each connected home automation equipment unit (10, 101, 102, 103, 10i, 10N) belonging to the first communication network (2) comprises a communication link determining module for determining a communication link device.

14. A communication system according to claim 12, wherein the remote equipment unit (4) comprises a communication link determining module for determining a communication link device.
